(19)

Europäisches
Patentamt
European
Patent Office
Office européen
des brevets

(11) **EP 3 617 905 A1**

(12) **EUROPEAN PATENT APPLICATION**

(43) Date of publication:
**04.03.2020 Bulletin 2020/10**

(51) Int Cl.:
*G06F 17/10* ([2006.01])    *B60W 40/00* ([2006.01])

(21) Application number: **19193119.5**

(22) Date of filing: **22.08.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.08.2018   JP 2018161293**

(71) Applicant: **TOYOTA JIDOSHA KABUSHIKI
KAISHA
Aichi-ken, 471-8571 (JP)**

(72) Inventors:
• **SATA, Kota**
  **Aichi-ken, 471-8571 (JP)**
• **YAMAKITA, Masaki**
  **Aichi-ken, 471-8571 (JP)**
• **TAKANO, Rin**
  **Aichi-ken, 471-8571 (JP)**
• **OYAMA, Hiroyuki**
  **Aichi-ken, 471-8571 (JP)**

(74) Representative: **D Young & Co LLP
120 Holborn
London EC1N 2DY (GB)**

(54) **CONTROL DEVICE AND CONTROL METHOD**

(57)    A control device includes a processor (23) configured to: calculate an estimated value of a contribution of a disturbance in a transition of an internal state of a dynamic power unit (10, 30), based on a last internal state and a last control input by which the internal state is controlled; determine the control input so as to minimize a difference from a reference value of the control input by which the internal state becomes a predetermined internal state, under a condition that a sum of the estimated value of the contribution and a value of the constraint condition expression when there is not the disturbance at the current time is equal to or more than a value resulting from reducing a last value of the constraint condition expression by a predetermined ratio; and control the dynamic power unit in accordance with the determined control input.

FIG. 1

EP 3 617 905 A1

# FIG. 5

START

↓

CALCULATE ESTIMATED VALUE OF CONTRIBUTION OF DISTURBANCE TO CONSTRAINT CONDITION EXPRESSION AT CURRENT TIME, IN ACCORDANCE WITH GAUSSIAN PROCESS, BASED ON LAST INTERNAL STATE OF ENGINE AND LAST CONTROL INPUT — S101

↓

DETERMINE OPENING DEGREE $\theta$thk SO AS TO MINIMIZE DIFFERENCE FROM REFERENCE OPENING DEGREE OF THROTTLE VALVE BY WHICH INTERNAL STATE OF ENGINE BECOMES PREDETERMINED STATE, UNDER CONDITION THAT SUM OF VALUE OF CONSTRAINT CONDITION EXPRESSION WHEN THERE IS NO DISTURBANCE AT CURRENT TIME AND ESTIMATED VALUE OF CONTRIBUTION OF DISTURBANCE AT CURRENT TIME IS EQUAL TO OR MORE THAN VALUE RESULTING FROM REDUCING LAST VALUE OF CONSTRAINT CONDITION EXPRESSION BY PREDETERMINED RATIO — S102

↓

CONTROL THROTTLE VALVE SUCH THAT OPENING DEGREE IS DETERMINED OPENING DEGREE $\theta$thk — S103

↓

END

**Description**

BACKGROUND OF THE INVENTION

1. Field of the Invention

The invention relates to a control device and a control method for controlling a dynamic power unit mounted on a vehicle, and a control device for a system in which an internal state changes with time.

2. Description of Related Art

In control of a system in which an internal state changes with time, for example, in control of a dynamic power unit of a vehicle, it is demanded to satisfy a state constraint relevant to the internal state of the system, for a safe operation of the system. Hence, as one control technique in which the state constraint is considered, there has been proposed a technique called Control Lyapunov Function-Control Barrier Function-Quadratic Programming (CLF-CBF-QP). This technique minimizes an evaluation function including a norm of an input, under two constraint conditions: an exponential stabilization control Lyapunov function (ES-CLF) constraint for annihilating a defined output function and a control barrier function (CBF) constraint for keeping the internal state in an invariant set satisfying the state constraint. Thereby, an optimal control input satisfying the state constraint and achieving a control target is obtained. The CLF-CBF-QP technique calculates the control input by solving a quadratic programming problem at each moment, without predicting a future state of the system that is a control object, and therefore, has an advantage of a relatively low calculation cost.

Further, in the CLF-CBF-QP technique, for restraining the state constraint from being not satisfied by a disturbance in a transition of the internal state of the system, which is a disturbance due to an error of a model of the system or the like, there has been proposed an introduction of a CLF constraint in which the disturbance is considered and a CBF constraint in which the disturbance is considered (see, Takano, Yamakita, "Proposition of CLF-CBF-QP in Which Disturbance is Considered", the 60th Japan Automatic Control Conference, November, 2017, and Takano, Yamakita, "CLF-CBF-QP Control Robust against Observed Disturbance", the 5th Multi-symposium on Control Systems, March, 2018, for example).

Furthermore, for the control of the system, a digital processor, as exemplified by an electronic control unit that controls the dynamic power unit of the vehicle, may be used. In such a case, the control of the system is discretely executed depending on the cycle of a clock with which the processor is driven. Hence, handling of the control barrier function with discrete time has been proposed (see Ayush Agrawal, Koushil Sreenath, "Discrete Control Barrier Functions for Safety-Critical Control of Discrete Systems with Application to Bipedal Robot Navigation", Robotics: Science and Systems 2017, July, 2017, for example).

SUMMARY OF THE INVENTION

When there is no disturbance to the system, a suitable control performance is achieved in accordance with the CLF-CBF-QP technique, by the technology described in Ayush Agrawal, Koushil Sreenath, "Discrete Control Barrier Functions for Safety-Critical Control of Discrete Systems with Application to Bipedal Robot Navigation", Robotics: Science and Systems 2017, July, 2017. However, when there is the disturbance to the system as in the case of the dynamic power unit mounted on the vehicle, there is a concern that the state constraint about the internal state of the system is not satisfied.

Hence, the invention provides a control device and a control method that make it possible to restrain the state constraint about the internal state of the system from being not satisfied even when the control device controls the dynamic power unit mounted on the vehicle with discrete time.

A first aspect of the invention provides a control device that controls a dynamic power unit of a vehicle for each predetermined control cycle. The control device includes a processor. The processor is configured to calculate an estimated value of a contribution of a disturbance in a transition of an internal state of the dynamic power unit, based on a last internal state of the dynamic power unit and a last control input by which the internal state of the dynamic power unit is controlled, the contribution of the disturbance being a contribution to a constraint condition expression that specifies a state constraint of the internal state of the dynamic power unit at a current time. The processor is configured to determine a control input so as to minimize a difference from a reference value of the control input by which the internal state becomes a predetermined internal state, under a condition that a sum of the estimated value of the contribution of the disturbance and a value of the constraint condition expression when there is not the disturbance at the current time is equal to or more than a value resulting from reducing a last value of the constraint condition expression by a predetermined ratio. The processor is configured to control the dynamic power unit in accordance with the determined control input.

In the control device, the processor may be configured to calculate the estimated value of the contribution of the disturbance at the current time based on a probability distribution with which the disturbance is approximated, the probability distribution being determined in accordance with the last internal state and the last control input.

In the control device, the probability distribution may be a Gaussian distribution. The processor may be configured to set the estimated value of the contribution of the disturbance, to a value resulting from subtracting a value obtained by multiplying a variance of the Gaussian distribution by a ratio corresponding to a lower limit of a predetermined confidence interval, from an average of the Gaussian distribution, the Gaussian distribution being determined in accordance with the last internal state and the last control input.

In the control device, the dynamic power unit may be an engine. The internal state may include the pressure in the engine and the temperature in the engine. The constraint condition expression may express ranges of the pressure and the temperature in which knocking of the engine does not occur.

In the control device, the dynamic power unit may be a direct-current motor. The internal state may include the angular velocity of a rotor of the direct-current motor and an electric current that flows through the direct-current motor. The constraint condition expression may express a condition under which the angular velocity is equal to or lower than a predetermined angular velocity.

A second aspect of the invention provides a control method for controlling a dynamic power unit of a vehicle for each predetermined control cycle, the vehicle including the dynamic power unit and a processor. The control method includes: calculating, by the processor, an estimated value of a contribution of a disturbance in a transition of an internal state of the dynamic power unit, based on a last internal state of the dynamic power unit and a last control input by which the internal state of the dynamic power unit is controlled, the contribution of the disturbance being a contribution to a constraint condition expression that specifies a state constraint of the internal state of the dynamic power unit at a current time; determining, by the processor, a control input so as to minimize a difference from a reference value of the control input by which the internal state becomes a predetermined internal state, under a condition that a sum of the estimated value of the contribution of the disturbance and a value of the constraint condition expression when there is not the disturbance at the current time is equal to or more than a value resulting from reducing a last value of the constraint condition expression by a predetermined ratio; and controlling, by the processor, the dynamic power unit in accordance with the determined control input.

A third aspect of the invention provides a control device that controls a system for each predetermined control cycle, an internal state of the system changing with time. The control device includes a processor. The processor is configured to calculate an estimated value of a contribution of a disturbance in a transition of the internal state of the system, based on a last internal state of the system and a last control input by which the internal state of the system is controlled, the contribution of the disturbance being a contribution to a constraint condition expression that specifies a state constraint of the internal state of the system at a current time. The processor is configured to determine a control input so as to minimize a difference from a reference value of the control input by which the internal state becomes a predetermined internal state, under a condition that a sum of the estimated value of the contribution of the disturbance and a value of the constraint condition expression when there is not the disturbance at the current time is equal to or more than a value resulting from reducing a last value of the constraint condition expression by a predetermined ratio. The processor is configured to control the system in accordance with the determined control input.

The above configuration exerts an effect of making it possible to restrain the state constraint about the internal state of the system from being not satisfied even when the control device controls the dynamic power unit mounted on the vehicle with discrete time.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a hardware configuration diagram of an electronic control device according to a first embodiment of a control device;

FIG. 2A is a diagram showing an exemplary transition of an internal state of an engine in the first embodiment, which is a transition obtained by a simulation;

FIG. 2B is a diagram showing an exemplary transition of the internal state of the engine in the first embodiment, which is a transition obtained by a simulation;

FIG. 3A is a diagram showing a temporal change in the value of a constraint condition expression for each control cycle in the first embodiment, which is a temporal change obtained by a simulation;

FIG. 3B is a diagram showing a temporal change in the value of the constraint condition expression for each control cycle in the first embodiment, which is a temporal change obtained by a simulation;

FIG. 4A is a diagram showing a temporal change in an internal state $x(2)$ of the engine for each control cycle in the first embodiment, which is a temporal change obtained by a simulation;

FIG. 4B is a diagram showing a temporal change in the internal state x(2) of the engine for each control cycle in the first embodiment, which is a temporal change obtained by a simulation;

FIG. 5 is an operation flowchart of a control process;

FIG. 6 is a hardware configuration diagram of an electronic control device according to a second embodiment of the control device;

FIG. 7A is a diagram showing a temporal change in the value of a constraint condition expression B for each control cycle in the second embodiment, which is a temporal change obtained by a simulation;

FIG. 7B is a diagram showing a temporal change in the value of the constraint condition expression B for each control cycle in the second embodiment, which is a temporal change obtained by a simulation;

FIG. 8A is a diagram showing a temporal change in an internal change of a direct-current motor for each control cycle, which is a temporal change obtained by a simulation; and

FIG. 8B is a diagram showing a temporal change in the internal change of the direct-current motor for each control cycle, which is a temporal change obtained by a simulation.

## DETAILED DESCRIPTION OF EMBODIMENTS

Hereinafter, a control device for a dynamic power unit mounted on a vehicle will be described with reference to the drawings. The control device controls the dynamic power unit mounted on the vehicle, in accordance with a solution method for a non-linear problem (CBF-NLP) of a robust CBF. The dynamic power unit is an exemplary system in which an internal state changes with time. On that occasion, the control device, for each predetermined control cycle, determines an actual control input to the dynamic power unit, in consideration of a contribution of a disturbance in a transition of the internal state of the dynamic power unit. The contribution of the disturbance is a contribution to a constraint condition expression $B(x) \geq 0$ in which an internal state x of the dynamic power unit is kept in an invariant set satisfying a predetermined state constraint. The internal state shows a behavior of the system that is a control object.

First, a condition relevant to estimation of the disturbance and calculation of a control input will be described. The condition is a condition for obtaining robustness against the disturbance and satisfying the state constraint.

A change in the internal state for each discrete time in the system as the control object is expressed as the following formula, for example.

$$x_{k+1} = f(x_k) + g(x_k)u_k + \delta_k \qquad (1)$$

Here, $x_k$ is a vector indicating the internal state of the system at a discrete time k, and $u_k$ is a vector indicating the control input to the system at the discrete time k. Further, $\delta_k$ is a vector indicating the disturbance at the discrete time k. Further, the constraint condition expression $B_k$ (= $B(x_k)$) of the system is set so as to satisfy the following condition, such that the constraint condition expression $B_k$ is a discrete exponential control barrier function (DECBF).

$$B_0 \geq 0$$

$$\Delta B_k + \gamma B_k \geq 0, \text{ where } \Delta B_k = B_{k+1} - B_k, 0 < \gamma \leq 1$$

Here, $\gamma$ is a gain indicating a convergence speed.

The constraint condition expression $B_{k+1}$ (= $B(x_{k+1})$) at a discrete time (k+1) is calculated based on the internal state $x_k$ of the system, the control input $u_k$ and the disturbance $\delta_k$ at the discrete time k, in accordance with the following formula.

$$B_{k+1} = B(f(x_k) + g(x_k)u_k + \delta_k) = Bn_{k+1} + \Delta_{k+1} \qquad (2)$$

Here, $Bn_{k+1}$ (= $B(f(x_k) + g(x_k)u_k)$ indicates the value of the constraint condition expression at the discrete time (k+1) in an ideal case where the disturbance is not included. Further, $\Delta_{k+1}$ (= $B_{k+1} - Bn_{k+1}$) indicates the difference between the value of the constraint condition expression in the case where the disturbance is included and the value of the constraint condition expression in the ideal case where the disturbance is not included, that is, the contribution of the disturbance to the constraint condition expression. Since the contribution $\Delta_{k+1}$ of the disturbance is unknown, a control input $u_{k+1}$ to

the system at the discrete time (k+1) is determined such that the following formula is satisfied.

$$Bn_{k+1}(x_k, u_k) + \Delta p_{k+1} - (1 - \gamma)B_k \geq 0 \qquad (3)$$

Here, $\Delta p_{k+1}$ indicates an estimated value of the contribution $\Delta_{k+1}$ of the disturbance at the discrete time (k+1). That is, a control input $u_{k+1}$ is determined such that the sum of the value of the constraint condition expression in the case where there is no disturbance and the estimated value of the contribution of the disturbance at the discrete time (k+1) (the current time) is equal to or more than the value resulting from reducing the value of the constraint condition expression at the discrete time k (the last time) by a predetermined ratio (1 - y).

Next, a condition that needs to be satisfied by the estimated value $\Delta p_{k+1}$ of the contribution of the disturbance and the actual contribution $\Delta_{k+1}$ of the disturbance will be described. By rewriting Formula (3) using a relation $Bn_{k+1} = B_{k+1} - \Delta_{k+1}$ that is derived from Formula (2), the following formula is obtained.

$$B_{k+1} \geq (1 - \gamma)B_k - \Delta e_{k+1} \qquad (4)$$

Here, $\Delta e_{k+1}$ indicates the difference ($\Delta p_{k+1} - \Delta_{k+1}$) between the estimated value $\Delta p_{k+1}$ of the contribution of the disturbance and the actual contribution $\Delta_{k+1}$ of the disturbance at the discrete time (k+1). By recursively calculating Formula (4), the following formula is obtained.

$$\begin{aligned} B_{k+1} &\geqq (1 - \gamma)\{(1 - \gamma)B_{k-1} - \Delta e_k\} - \Delta e_{k+1} \\ &= (1 - \gamma)^2 B_{k-1} - (1 - \gamma)\Delta e_k - \Delta e_{k+1} \\ &\quad \bullet\ \bullet\ \bullet \\ &\geqq (1 - \gamma)^{k+1} B_0 - \sum_{i=1}^{k+1}(1 - \gamma)^{k+1-i}\Delta e_i \end{aligned} \qquad (5)$$

Here, $\Delta e_i = Ap_i - \Delta_i$ is satisfied.

Therefore, in order that the state constraint $B_{k+1} \geq 0$ is satisfied at the discrete time (k+1), satisfaction of the following formula is required.

$$(1 - \gamma)^{k+1} B_0 - \sum_{i=1}^{k+1}(1 - \gamma)^{k+1-i}\Delta e_i \geqq 0 \qquad (6)$$

Since $B_0 \geq 0$ and $0 < \gamma \leq 1$ are assumed as described above, the first member of the left-hand side of Formula (6) has a non-negative value. Therefore, for satisfying the state constraint, at each discrete time i, satisfaction of the following Formula (7) is required. That is, at each discrete time i, it is required to set the estimated value $\Delta p_i$ of the contribution of the disturbance such that the estimated value $\Delta p_i$ of the contribution of the disturbance is equal to or less than the actual contribution $\Delta_i$ of the disturbance.

$$\Delta e_i = \Delta p_i - \Delta_i \leq 0 \qquad (7)$$

For estimating the contribution of the disturbance, the disturbance is approximated, for example, by a model using a Gaussian process. In this case, an approximate value $\Delta^*_{k+1}$ of the contribution of the disturbance at the discrete time (k+1) is expressed as a Gaussian distribution, as shown in the following formula.

$$\Delta^*_{k+1} = f_{GP}(x_k, u_k) \qquad (8)$$

$$f_{GP}(x_k, u_k) \sim N(\mu_{k+1}, \sigma^2_{k+1})$$

That is, a Gaussian distribution expressing a model of the disturbance that has learned $(x_k, u_k)$ is used as the approximate value $\Delta^*_{k+1}$ of the contribution of the disturbance at the discrete time (k+1). Here, the contribution $\Delta_{k+1}$ of the disturbance

at the discrete time (k+1) in the learning of the Gaussian distribution is calculated as $\{B(f(x_k) + g(x_k)u_k + \delta_k) - B(f(x_k) + g(x_k)u_k)\}$, from Formula (2).

That is, when the internal state $x_k$ at the discrete time k is given, the approximate value $\Delta*_{k+1}$ of the contribution of the disturbance is expressed as a function of the control input $u_k$ at the discrete time k. As described above, it is required to set the estimated value $\Delta p_i$ of the contribution of the disturbance such that the estimated value $\Delta p_i$ of the contribution of the disturbance is equal to or less than the actual contribution $\Delta_i$ of the disturbance. Hence, the estimated value $\Delta p_{k+1}$ of the contribution of the disturbance is set based on an average $\mu_{k+1}$ and a variant $\sigma_{k+1}$ of the approximate value $\Delta*_{k+1}$ of the contribution of the disturbance. For example, the estimated value $\Delta p_{k+1}$ of the contribution of the disturbance is set in accordance with the following formula.

$$\Delta p_{k+1}(x_k, u_k) = \mu_{k+1} - \alpha\sigma_{k+1} \qquad (9)$$

Here, $\alpha$ is a value corresponding to a lower limit of a confidence interval. For example, when the lower limit of the confidence interval is 95%, $\alpha = 2$ is satisfied, and when the lower limit of the confidence interval is 68%, $\alpha = 1$ is satisfied.

When the constraint condition in Formula (3) is set as described above, the control input $u*_k$ at each discrete time k is calculated under the constraint condition, such that the difference from a reference control input $u_{refk}$ at the discrete time k is minimized, in accordance with the following formula.

$$u_k^* = min_u \frac{1}{2}(u_k - u_{refk})^T(u_k - u_{refk}) \qquad (10)$$

For example, the reference control input $u_{refk}$ may be a control input value that is obtained by performing a simple proportional-plus-integral control such that the internal state of the system is a desired state.

A control device according to a first embodiment will be described below. The control device according to the first embodiment controls an engine mounted on a vehicle. On that occasion, the control device adopts the temperature and pressure in the engine, as the internal state, and controls the opening degree of a throttle valve, which is an example of the control input, for each predetermined control cycle, under a state constraint that an abnormality such as knocking does not occur in the engine, that is, the engine normally operates.

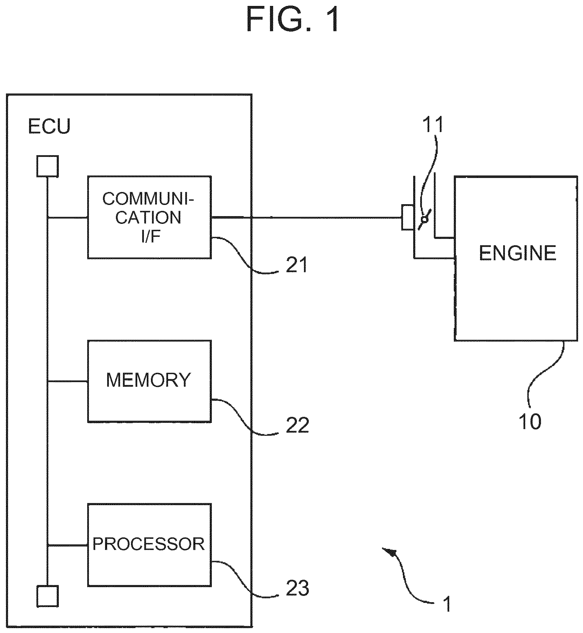

FIG. 1 is a hardware configuration diagram of an electronic control device according to the first embodiment of the control device. In the embodiment, an electronic control device (ECU) 1 controls an engine 10 mounted on the vehicle and a throttle valve 11 for adjusting air intake to the engine 10, and includes a communication interface 21, a memory 22, and a processor 23.

The communication interface 21 is an exemplary communication device, and includes an interface circuit for connecting the ECU 1 to an in-vehicle network (not illustrated). Further, the communication interface 21 receives sensor signals from various sensors mounted on the vehicle, and transfers the received sensor signals to the processor 23. Examples of the sensor signals include sensor signals indicating the pressure and temperature in a combustion chamber of the engine 10, and accelerator operation amount. When the communication interface 21 receives, from the processor 23, a control signal to an actuator (not illustrated) that drives the throttle valve 11, the communication interface 21 outputs the control signal to the actuator.

The memory 22 is an exemplary storage device, and for example, includes a volatile semiconductor memory and a non-volatile semiconductor memory. Further, the memory 22 stores a variety of data to be used in control processes that are executed by the processor 23, and for example, stores various parameters for identifying the constraint condition expression, parameters indicating the internal state of the engine 10, and parameters specifying the transition of the internal state.

The processor 23 is an exemplary control device, and includes a single or a plurality of central processing units (CPU), and peripheral circuits. The processor 23 may further include another operational circuit such as a logical operation unit or an arithmetic logical unit. The processor 23 controls the opening degree of the throttle valve 11 of the engine 10, for each predetermined control cycle corresponding to the cycle of a clock signal that is supplied to the processor 23.

In the embodiment, for indicating the temperature and pressure in the engine 10, the vector $x_k$ indicating the internal state of the engine 10 includes two elements $(x_k(1), x_k(2))$. A temperature $T_k$ and a pressure $P_k$ of the engine 10 at the discrete time k are expressed as $T_k = x_k(2) / x_k(1)$ and $P_k = x(2)$, respectively. In this case, from Formula (1), the discrete change in the internal state of the engine 10 is expressed as the following formula.

$$x_{k+1} = \begin{bmatrix} 1 - \tilde{\theta}_1 & 0 \\ 0 & 1 - \tilde{\theta}_3 \end{bmatrix} x_k + \begin{bmatrix} \tilde{\theta}_2(1 - x_k(2)^2) \\ \tilde{\theta}_4(1 - x_k(2)^2) \end{bmatrix} u_k + \delta_k \qquad (11)$$

$$:= A x_k + g(x_k) u_k + \delta_k$$

$$\tilde{\theta}_i = \theta_i \Delta_t$$

$$u_k = 1 - \cos(\theta_{thk})$$

Here, $\theta_i$ (i = 1, 2, 3, 4) is a constant, and $\theta_{thk}$ is the opening degree ($0° \leq \theta_{thk} \leq 90°$) of the throttle valve 11 at the discrete time k. Therefore, for the control input $u_k$, $0 \leq u_k \leq 1$ is satisfied. Further, $\Delta_t$ is a control cycle.

For facilitating handling by linearization of the control input, the control unit $u_k$ is transformed into a variable $v_k$ as shown in the following formula.

$$u_k = \frac{1}{\tilde{\theta}_4(1 - x_k(2)^2)} v_k \qquad (12)$$

In this case, Formula (11) is expressed as the following formula.

$$x_{k+1} = A x_k + D v_k + \delta_k \qquad (13)$$

$$D := \begin{bmatrix} \frac{\theta_4}{\theta_2} & 1 \end{bmatrix}^T$$

Here, the disturbance $\delta_k$ is expressed as a Gaussian noise $N(\mu, \Sigma)$. As an example, $\mu = [-2 \times 10^{-3}, 2 \times 10^{-3}]^T$ and $\Sigma = (5 \times 10^{-3})I$ are satisfied. Here, $\mu$ and $\Sigma$ is determined, for example, by simulations or experiments, depending on the structure of the engine 10 as the control object, and the like. Further, Formula (10) is transformed into the following formula.

$$v_k^* = min_u \frac{1}{2}(v_k - v_{refk})^T(v_k - v_{refk}) \qquad (14)$$

In the embodiment, the constraint condition expression (control barrier function, CBF) by which the engine 10 normally operates without the occurrence of the abnormality such as knocking is expressed as the following formula.

$$B(x_k) = 1 - \frac{1}{\alpha^2} x_k(2)^2 - \frac{1}{\beta^2}\left(\frac{x_k(2)}{x_k(1)} - 1\right)^2 \geqq 0 \qquad (15)$$

Here, $\alpha$ and $\beta$ each are constants, and are set to $\alpha = 1.1$ and $\beta = 0.3$, for example.

Therefore, for each control cycle, the processor 23 calculates $v_k$ in accordance with Formula (14), such that the constraint condition expression shown by Formula (15) satisfies the condition shown by Formula (3). At that time, the processor 23 sets the estimated value of the contribution of the disturbance, in accordance with Formula (9). On that occasion, the processor 23 evaluates the states $x_k(1)$, $x_k(2)$, based on the pressure and temperature of the engine 10 at the last control cycle, which are the pressure and temperature detected by sensors. Further, the processor 23 specifies the reference control input $u_{ref}$, as a control input value that is calculated by performing a simple proportional-plus-integral control such that the state $x_k(2)$, that is, the pressure P in the engine 10 is a desired value $x_{2d}$ (for example, 0.8). For example, a gain Kp for the proportional term is set to 5, and a gain KI for the integral term is set to 0.3. The processor 23 determines the desired value $x_{2d}$ of the pressure P, depending on the received accelerator operation amount, while referring to a reference table indicating a relation between the accelerator operation amount and the desired value $x_{2d}$. The reference table is stored in the memory 22 in advance. Then, the processor 23 calculates the opening degree $\theta_{thk}$ of the throttle valve 11, based on the calculated $v_k$, Formula (11) and Formula (12).

Whenever the processor 23 calculates the opening degree $\theta_{thk}$ of the throttle valve 11, the processor 23 outputs a control signal for adjusting the opening degree of the throttle valve 11 to the calculated opening degree $\theta_{thk}$, to the actuator (not illustrated) that drives the throttle valve 11, through the communication interface 21.

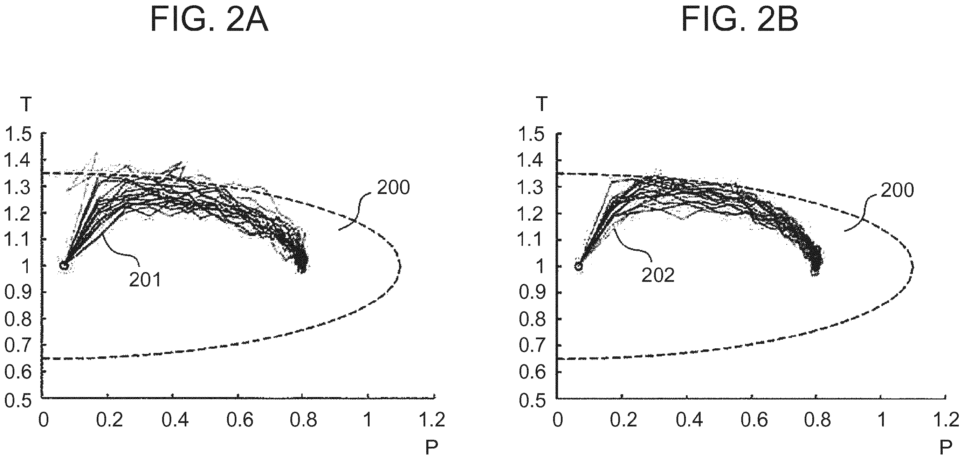

FIG. 2A and FIG. 2B are diagrams showing exemplary transitions of the internal state of the engine 10, which are transitions obtained by simulations. FIG. 2A shows a simulation result when the estimated value of the contribution of the disturbance is zero, as a comparative example. FIG. 2B shows a simulation result when the estimated value of the contribution of the disturbance is set in accordance with Formula (9) (the coefficient $\alpha = 2$) and the gain $\gamma$ in Formula (3) is 0.8. In each of FIG. 2A and FIG. 2B, the abscissa axis indicates the pressure, and the ordinate axis indicates the temperature. Further, a region 200 surrounded by the dotted line shows a region ($B \geq 0$) in which the state constraint shown by Formula (15) is satisfied. Further, in FIG. 2A, a locus 201 shows a transition of the internal state of the engine 10, which is a transition obtained by the simulation. Similarly, in FIG. 2B, a locus 202 shows a transition of the internal state of the engine 10, which is a transition obtained by the simulation.

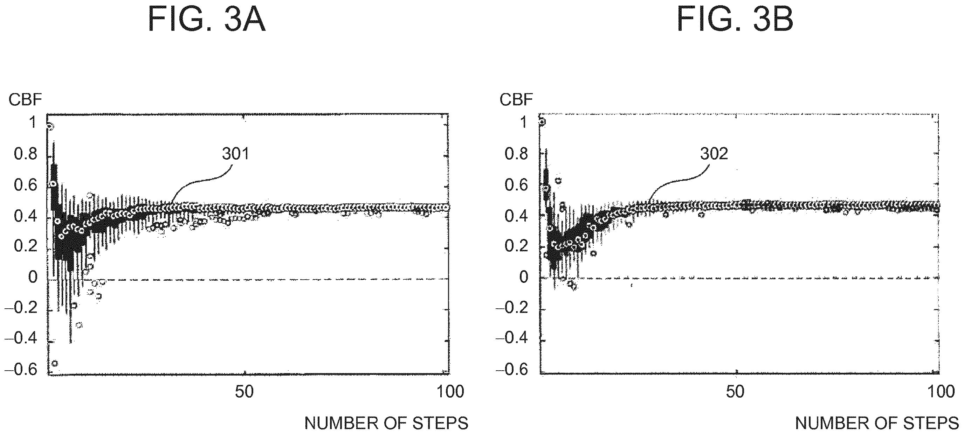

FIG. 3A and FIG. 3B are diagrams showing temporal changes in the value of the constraint condition expression B shown by Formula (15) for each control cycle, which are temporal changes obtained by simulations. FIG. 3A shows a simulation result when the estimated value of the contribution of the disturbance is zero, as the comparative example. FIG. 3B shows a simulation result when the estimated value of the contribution of the disturbance is set in accordance with Formula (9) (the coefficient $\alpha = 2$) and the gain $\gamma$ in Formula (3) is 0.8. In each of FIG. 3A and FIG. 3B, the abscissa axis indicates the number of steps (that is, elapsed time on a control cycle basis), and the ordinate axis indicates the value of the constraint condition expression B. Further, in FIG. 3A, a locus 301 shows a temporal change in the value of the constraint condition expression B, which is a temporal change obtained by the simulation. Similarly, in FIG. 3B, a locus 302 shows a temporal change in the value of the constraint condition expression B, which is a temporal change obtained by the simulation.

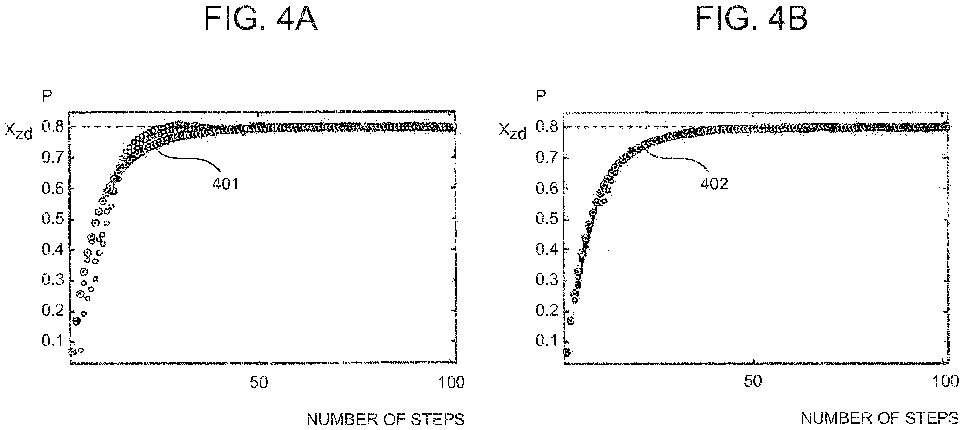

FIG. 4A and FIG. 4B are diagrams showing temporal changes in the internal state x(2) of the engine 10 for each control cycle, that is, the pressure P, which are temporal changes obtained by simulations. FIG. 4A shows a simulation result when the estimated value of the contribution of the disturbance is zero, as the comparative example. FIG. 4B shows a simulation result when the estimated value of the contribution of the disturbance is set in accordance with Formula (9) (the coefficient $\alpha = 2$) and the gain $\gamma$ in Formula (3) is 0.8. In each of FIG. 4A and FIG. 4B, the abscissa axis indicates the number of steps, and the ordinate axis indicates the value of the internal state x(2). Further, in FIG. 4A, a locus 401 shows a temporal change in the value of the internal state x(2), which is a temporal change obtained by the simulation. Similarly, in FIG. 4B, a locus 402 shows a temporal change in the value of the internal state x(2), which is a temporal change obtained by the simulation.

As shown in FIG. 2A, FIG. 2B, FIG. 3A and FIG. 3B, it is found that the number of times to which the value of the constraint condition expression B becomes negative, that is, the number of times which the state constraint is not satisfied is decreased by considering the influence of the disturbance in the constraint condition expression, compared to the comparative example. Further, as shown in FIG. 4A and FIG. 4B, it is found that the internal state x(2) converges on the target value more suitably compared to the comparative example.

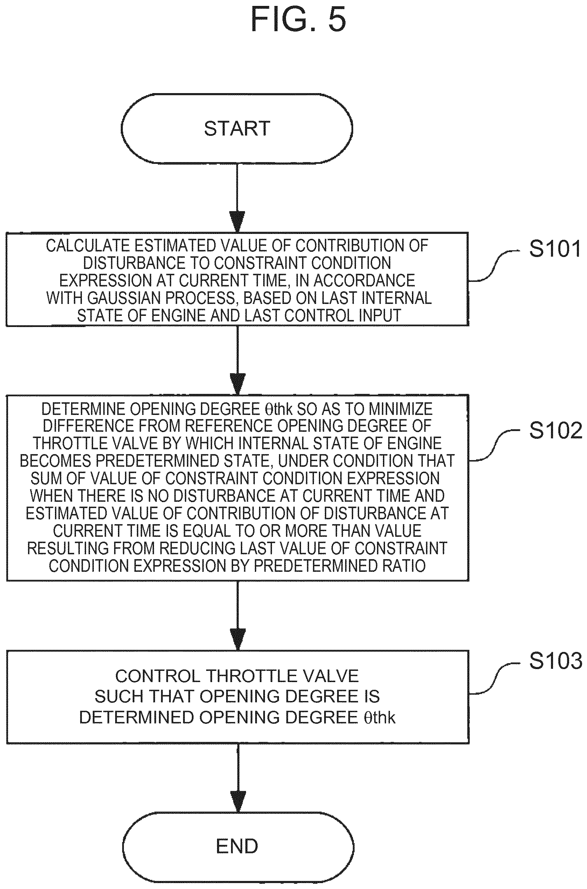

FIG. 5 is an operation flowchart of a control process that is executed by the processor 23. The processor 23 executes the control process for each control cycle, in accordance with the operation flowchart shown in FIG. 5.

The processor 23 calculates the estimated value of the contribution of the disturbance to the constraint condition expression about the internal state of the engine 10 at the current time, in accordance with the Gaussian process, based on the last internal state (the temperature and the pressure) of the engine 10 and the last control input (the opening degree of the throttle valve 11) (step S101).

The processor 23 determines the opening degree $\theta_{thk}$ of the throttle valve 11 so as to minimize the difference from the opening degree $\theta_{thk}$ of the throttle valve 11 by which the internal state of the engine 10 becomes a predetermined state, under a condition that the sum of the value of the constraint condition expression when there is no disturbance at the current time and the estimated value of the contribution of the disturbance at the current time is equal to or more than a value resulting from reducing the last value of the constraint condition expression by a predetermined ratio (step S102). The processor 23 outputs the control signal for controlling the throttle valve 11 such that the opening degree becomes the determined opening degree $\theta_{thk}$ of the throttle valve 11, to the actuator (not illustrated) that drives the throttle valve 11 (step S103). Then, the processor 23 ends the control process.

As described above, when the control device according to the first embodiment controls the engine for each control cycle, the control device sets the condition that needs to be satisfied by the constraint condition expression about the internal state of the engine, in consideration of the disturbance in the transition of the internal state of the engine, and evaluates the estimated value of the contribution of the disturbance such that the condition is satisfied. Then, the control device determines the control input under the condition that needs to be satisfied by the constraint condition expression. Thereby, the control device makes it possible to restrain the state constraint about the internal state of the engine from being not satisfied even when the control device controls the engine with the discrete time.

Next, a control device according to a second embodiment will be described. The control device according to the second embodiment controls a direct-current motor that is another example of the dynamic power unit mounted on the vehicle. On that occasion, the control device controls the voltage to be applied to the direct-current motor, under a state constraint that the angular velocity of the direct-current motor is equal to or lower than a predetermined angular velocity.

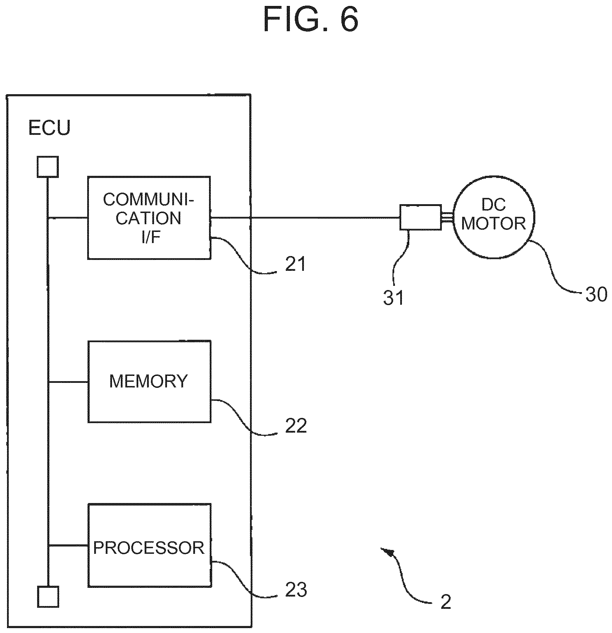

FIG. 6 is a hardware configuration diagram of an electronic control device according to the second embodiment of the control device. In the embodiment, an electronic control device (ECU) 2 controls a direct-current motor 30 mounted on the vehicle, and includes a communication interface 21, a memory 22, and a processor 23. The ECU 2 according to the second embodiment is different from the ECU 1 according to the first embodiment, in the control process to be executed by the processor 23. In the following, the control process to be executed by the processor 23 will be described. As for the other constituent elements of the ECU 2, refer to the descriptions of the corresponding constituent elements of the ECU 1 according to the first embodiment.

First, a state equation of the direct-current motor 30 as a control object and a state constraint to be applied will be described. In the embodiment, the state equation of the direct-current motor 30 as the control object is expressed as the following expression.

$$\frac{d}{dt}\begin{bmatrix}\omega\\i\end{bmatrix} = \begin{bmatrix}-\dfrac{B}{J} & \dfrac{K_T}{J}\\-\dfrac{K_b}{L} & -\dfrac{R}{L}\end{bmatrix}\begin{bmatrix}\omega\\i\end{bmatrix} + \begin{bmatrix}0\\\dfrac{1}{L}\end{bmatrix}v \qquad (1\,6)$$

Here, $\omega$ represents the angular velocity of a rotor of the direct-current motor 30, and i represents the electric current that flows through the direct-current motor 30. Further, v represents the voltage that is supplied to the direct-current motor 30. B is a constant indicating the rotor viscosity of the direct-current motor 30, and J is a constant indicating the inertia of the direct-current motor 30 and a load to be driven by the direct-current motor 30. Further, $K_T$ is the torque constant of the direct-current motor 30, and $K_b$ is the induced electromotive force constant of the direct-current motor 30. Furthermore, L is the inductance of a coil of the direct-current motor 30, and R is the resistance of a circuit of the direct-current motor 30. As shown in Formula (16), the internal state of the direct-current motor 30 is expressed by the angular velocity $\omega$ and the electric current i, and the control input is the voltage v. The processor 23, for each control cycle, may receive a sensor signal indicating the angular velocity $\omega$ and a sensor signal indicating the electric current i, from an angular velocity sensor (not illustrated) and an ammeter (not illustrated) that are provided in the direct-current motor 30, through the communication interface 21.

By discretizing Formula (16) using a control cycle T, the following formula is obtained.

$$x_{k+1} = \exp(AT)\,x_k + \int_0^T \exp(A\tau)d\tau B u_k \qquad (1\,7)$$

$$A_d := \exp(AT),\ B_d := \int_0^T \exp(A\tau)d\tau B$$

Here, $x_k$ is a vector indicating the internal state, in which the element $x_k(1)$ is the angular velocity $\omega_k$ at the discrete time k and the element $x_k(2)$ is the electric current $i_k$. Further, the control input $u_k$ indicates the voltage $v_k$ at the discrete time k.

Therefore, the change in the state of the direct-current motor 30 for each control cycle is expressed as the following formula, in consideration of the disturbance $\delta(x_k, u_k)$, similarly to Formula (1).

$$x_{k+1} = A_d x_k + B_d u_k + \delta_k(x_k, u_k) \qquad (18)$$

For example, the disturbance $\delta(x_k, u_k)$ is approximately expressed as a Gaussian distribution, similarly to the first embodiment. Therefore, the contribution $\Delta_{k+1}$ of the disturbance at the discrete time (k+1) in the learning of the Gaussian distribution is calculated as $\{-C\delta_k(x_k, u_k)\}$, similarly to the above.

In the embodiment, the processor 23 controls the voltage $v_k$ to be applied to the direct-current motor 30 such that the angular velocity $\omega_k$ is a desired value $\omega_d$ of the angular velocity, under a state constraint that the angular velocity $\omega_k$ is equal to or lower than the desired value $\omega_d$. For example, the processor 23 determines the desired value $\omega_d$, while referring to a reference table indicating a relation between the accelerator operation amount of the vehicle received through the communication interface 21 and the desired value $\omega_d$. For example, the reference table is previously stored in the memory 22.

That is, in the embodiment, a constraint condition expression $B_k$ is expressed as the following formula.

$$B_k := \omega_d - \omega_k = \omega_d - C x_k \geq 0 \qquad (19)$$

$$C := [1\ 0]$$

Therefore, the constraint condition at the discrete time (k+1) is expressed as the following formula.

$$B_{k+1} = \omega_d - \omega_{k+1} = \omega_d - C(A_d x_k + B_d u_k + \delta_k(x_k, u_k))$$

$$= \omega_d - C(A_d x_k + B_d u_k) - C\delta_k(x_k, u_k) \qquad (20)$$

$$Bn_{k+1} := \omega_d - C(A_d x_k + B_d u_k),\ \Delta_{k+1} := -C\delta_k(x_k, u_k)$$

Accordingly, similarly to Formula (3), when the estimated value of the contribution of the disturbance is $\Delta p_{k+1}$, it is demanded to satisfy the following condition for the constraint condition.

$$Bn_{k+1}(x_k, u_k) + \Delta p_{k+1} - (1 - \gamma)B_k \geq 0 \qquad (21)$$

Similarly to the first embodiment, the processor 23 approximates the disturbance in accordance with the Gaussian process, and thereby can calculate the estimated value $\Delta p_{k+1}$ of the contribution of the disturbance in accordance with Formula (9).

As described above, for each control cycle, the processor 23 evaluates the control input $u_k$ so as to minimize the difference from the reference control input $u_{ref}$ in accordance with Formula (10), while satisfying Formula (21). On that occasion, the processor 23 uses, as $x_k$, the angular velocity and electric current value at the last control cycle, which are detected by the angular velocity sensor and the ammeter. Similarly to the first embodiment, the processor 23 specifies the reference control input $u_{ref}$, as a control input value that is calculated by performing a simple proportional-plus-integral control such that the angular velocity $\omega$ of the rotor of the direct-current motor 30 is the desired value $\omega_d$. Then, the processor 23 controls a driving circuit 31 that supplies voltage to the direct-current motor 30, such that the voltage v to be applied to the direct-current motor 30 is the voltage value $v_k$ corresponding to the evaluated control input $u_k$.

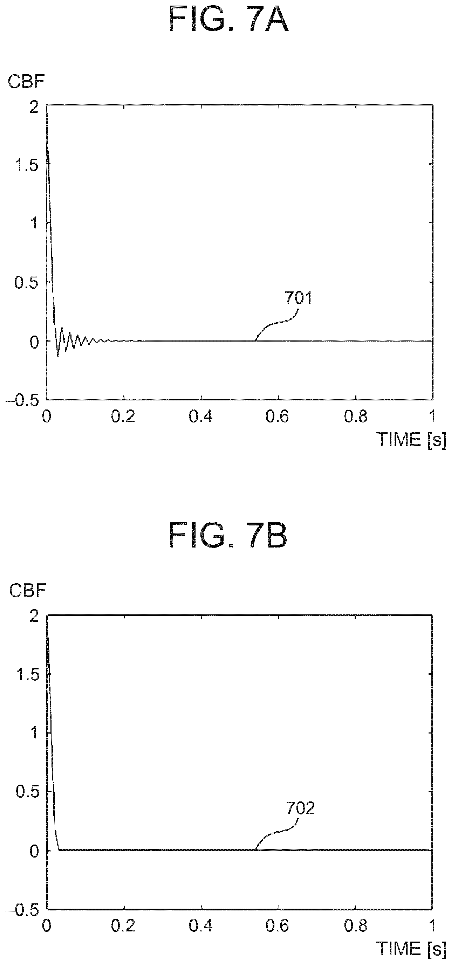

FIG. 7A and FIG. 7B are diagrams showing temporal changes in the value of the constraint condition expression B shown by Formula (20) for each control cycle, which are temporal changes obtained by simulations. FIG. 7A shows a simulation result when the estimated value of the contribution of the disturbance is zero, as a comparative example. FIG. 7B shows a simulation result when the estimated value of the contribution of the disturbance is set in accordance with Formula (9) (the coefficient $\alpha$ = 2) and the gain $\gamma$ in Formula (3) is 1.0. In each of FIG. 7A and FIG. 7B, the abscissa axis indicates elapsed time, and the ordinate axis indicates the value of the constraint condition expression B. Further, in FIG. 7A, a locus 701 indicates a temporal change in the value of the constraint condition expression B, which is a temporal change obtained by the simulation. Similarly, in FIG. 7B, a locus 702 indicates a temporal change in the value of the constraint condition expression B, which is a temporal change obtained by the simulation.

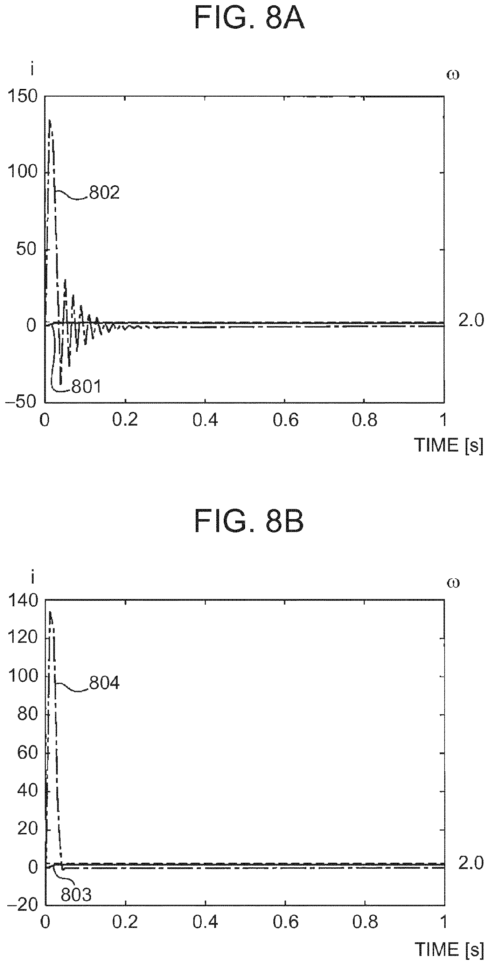

FIG. 8A and FIG. 8B are diagrams showing temporal changes in the internal state of the direct-current motor 30 for each control cycle, that is, the angular velocity $\omega$ and the electric current i, which are temporal changes obtained by simulations. FIG. 8A shows a simulation result when the estimated value of the contribution of the disturbance is zero, as the comparative example. FIG. 8B shows a simulation result when the estimated value of the contribution of the disturbance is set in accordance with Formula (9) (the coefficient $\alpha$ = 2) and the gain $\gamma$ in Formula (3) is 1.0. In each of FIG. 8A and FIG. 8B, the abscissa axis indicates elapsed time, and the ordinate axes indicate the values of the angular velocity $\omega$ (right side) and the electric current i (left side). Further, in FIG. 8A, a locus 801 and a locus 802 show a temporal change in the value of the angular velocity $\omega$ and a temporal change in the value of the electric current i, respectively. These temporal changes are obtained by the simulations. Similarly, in FIG. 8B, a locus 803 and a locus 804 show a temporal change in the value of the angular velocity $\omega$ and a temporal change in the value of the electric current i, respectively. These temporal changes are obtained by the simulations.

In the simulation, the control cycle T was set to 50 ms. Further, the magnitudes of the modeling errors for the inertia J, the resistance R and the rotor viscosity were 0.5 J, 1.1 R and 0.8 B, respectively. The desired value $\omega_d$ of the angular velocity was 2.0. In the learning of the model of the disturbance, the desired value $\omega_d$ of the angular velocity was (sin5t+1). Furthermore, the following formula was used as a proportional-plus-integral expression for calculating the reference control input $u_{ref}$.

$$u_{refk} = -10(\omega_k - \omega_d) - 4\Sigma(\omega_k - \omega_d) \qquad (22)$$

As shown in FIG. 7A and FIG. 7B, it is found that the number of times to which the value of the constraint condition expression B becomes negative, that is, the number of times which the constraint condition is not satisfied is decreased by considering the influence of the disturbance in the constraint condition expression, compared to the comparative example. Further, as shown in FIG. 8A and FIG. 8B, it is found that the angular velocity $\omega$ converges on the target value $\omega_d$ in a shorter time compared to the comparative example. Furthermore, it is found that the electric current i also converges in a shorter time.

As described above, the control device according to the second embodiment also makes it possible to restrain the constraint condition about the internal state of the direct-current motor from being not satisfied even when the control device controls the direct-current motor with the discrete time.

In the above embodiments, the processor 23 may use a probability distribution other than the Gaussian distribution, for approximating the disturbance of the internal state of the system as the control object. For example, the processor 23 may approximate the disturbance using a Poisson distribution. In this case, similarly to the above embodiments, the average of the Poisson distribution at the current time is determined based on the internal state of the system and the control input at the last control cycle. Further, the estimated value of the contribution of the disturbance is calculated in accordance with Formula (9).

The control device may be used for the control of a system that is other than the dynamic power unit mounted on the vehicle and in which the internal state changes with time. In this case also, for each control cycle, a processor of the control device calculates the control input so as to minimize the difference from the reference control input in accordance with Formula (10), under the constraint condition in Formula (3). On that occasion, the processor calculates the estimated value of the contribution of the disturbance in accordance with Formula (9), based on the probability distribution with which the disturbance is approximated.

Furthermore, similarly to the above embodiments, for each control cycle, the processor determines the value of the reference control input by performing a proportional-plus-integral control such that the internal state of the system as the control object is a desired state. Alternatively, the processor may determine the value of the reference control input, in accordance with a PID control.

Thus, within the scope of the invention, those skilled in the art can make various modifications depending on a manner in which the invention is carried out.

## Claims

1. A control device that controls a dynamic power unit (10; 30) of a vehicle for each predetermined control cycle, the control device comprising a processor (23) configured to:

    calculate an estimated value of a contribution of a disturbance in a transition of an internal state of the dynamic power unit (10; 30), based on a last internal state of the dynamic power unit (10; 30) and a last control input by which the internal state of the dynamic power unit (10; 30) is controlled, the contribution of the disturbance being a contribution to a constraint condition expression that specifies a state constraint of the internal state of the dynamic power unit (10; 30) at a current time;

    determine a control input so as to minimize a difference from a reference value of the control input by which the internal state becomes a predetermined internal state, under a condition that a sum of the estimated value of the contribution of the disturbance and a value of the constraint condition expression when there is not the disturbance at the current time is equal to or more than a value resulting from reducing a last value of the constraint condition expression by a predetermined ratio; and

    control the dynamic power unit (10; 30) in accordance with the determined control input.

2. The control device according to claim 1, wherein the processor (23) is configured to calculate the estimated value of the contribution of the disturbance at the current time based on a probability distribution with which the disturbance is approximated, the probability distribution being determined in accordance with the last internal state and the last control input.

3. The control device according to claim 2, wherein:

    the probability distribution is a Gaussian distribution; and
    the processor (23) is configured to set the estimated value of the contribution of the disturbance, to a value resulting from subtracting a value obtained by multiplying a variance of the Gaussian distribution by a ratio corresponding to a lower limit of a predetermined confidence interval, from an average of the Gaussian distribution, the Gaussian distribution being determined in accordance with the last internal state and the last control input.

4. The control device according to any one of claims 1 to 3, wherein:

the dynamic power unit is an engine (10);
the internal state includes a pressure in the engine (10) and a temperature in the engine (10); and
the constraint condition expression expresses ranges of the pressure and the temperature in which knocking
of the engine (10) does not occur.

5. The control device according to any one of claims 1 to 3, wherein:

the dynamic power unit is a direct-current motor (30);
the internal state includes an angular velocity of a rotor of the direct-current motor (30) and an electric current
that flows through the direct-current motor (30); and
the constraint condition expression expresses a condition under which the angular velocity is equal to or lower
than a predetermined angular velocity.

6. A control method for controlling a dynamic power unit (10; 30) of a vehicle for each predetermined control cycle,
the vehicle including the dynamic power unit (10: 30) and a processor (23), the control method comprising:

calculating, by the processor (23), an estimated value of a contribution of a disturbance in a transition of an
internal state of the dynamic power unit (10; 30), based on a last internal state of the dynamic power unit (10;
30) and a last control input by which the internal state of the dynamic power unit (10; 30) is controlled, the
contribution of the disturbance being a contribution to a constraint condition expression that specifies a state
constraint of the internal state of the dynamic power unit (10; 30) at a current time;
determining, by the processor (23), a control input so as to minimize a difference from a reference value of the
control input by which the internal state becomes a predetermined internal state, under a condition that a sum
of the estimated value of the contribution of the disturbance and a value of the constraint condition expression
when there is not the disturbance at the current time is equal to or more than a value resulting from reducing a
last value of the constraint condition expression by a predetermined ratio; and
controlling, by the processor (23), the dynamic power unit (10; 30) in accordance with the determined control
input.

7. A control device that controls a system for each predetermined control cycle, an internal state of the system changing
with time, the control device comprising a processor (23) configured to:

calculate an estimated value of a contribution of a disturbance in a transition of the internal state of the system,
based on a last internal state of the system and a last control input by which the internal state of the system is
controlled, the contribution of the disturbance being a contribution to a constraint condition expression that
specifies a state constraint of the internal state of the system at a current time;
determine a control input so as to minimize a difference from a reference value of the control input by which
the internal state becomes a predetermined internal state, under a condition that a sum of the estimated value
of the contribution of the disturbance and a value of the constraint condition expression when there is not the
disturbance at the current time is equal to or more than a value resulting from reducing a last value of the
constraint condition expression by a predetermined ratio; and
control the system in accordance with the determined control input.

# FIG. 1

ECU

COMMUNI-
CATION
I/F

21

MEMORY

22

PROCESSOR

23

11

ENGINE

10

1

FIG. 2A

FIG. 2B

# FIG. 3A

# FIG. 3B

CBF

301

CBF

302

NUMBER OF STEPS

NUMBER OF STEPS

EP 3 617 905 A1

# FIG. 4A

# FIG. 4B

EP 3 617 905 A1

# FIG. 5

START

CALCULATE ESTIMATED VALUE OF CONTRIBUTION OF
DISTURBANCE TO CONSTRAINT CONDITION
EXPRESSION AT CURRENT TIME, IN ACCORDANCE
WITH GAUSSIAN PROCESS, BASED ON LAST INTERNAL
STATE OF ENGINE AND LAST CONTROL INPUT — S101

DETERMINE OPENING DEGREE $\theta$thk SO AS TO MINIMIZE
DIFFERENCE FROM REFERENCE OPENING DEGREE OF
THROTTLE VALVE BY WHICH INTERNAL STATE OF ENGINE
BECOMES PREDETERMINED STATE, UNDER CONDITION THAT
SUM OF VALUE OF CONSTRAINT CONDITION EXPRESSION
WHEN THERE IS NO DISTURBANCE AT CURRENT TIME AND
ESTIMATED VALUE OF CONTRIBUTION OF DISTURBANCE AT
CURRENT TIME IS EQUAL TO OR MORE THAN VALUE
RESULTING FROM REDUCING LAST VALUE OF CONSTRAINT
CONDITION EXPRESSION BY PREDETERMINED RATIO — S102

CONTROL THROTTLE VALVE
SUCH THAT OPENING DEGREE IS
DETERMINED OPENING DEGREE $\theta$thk — S103

END

# FIG. 6

ECU

COMMUNI-
CATION
I/F
— 21

DC
MOTOR

31      30

MEMORY
— 22

PROCESSOR
— 23

2

# FIG. 7A

# FIG. 7B

# FIG. 8A

# FIG. 8B

Europäisches
Patentamt

European
Patent Office

Office européen
des brevets

**EUROPEAN SEARCH REPORT**

Application Number

EP 19 19 3119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | AYUSH AGRAWAL ET AL: "Discrete Control Barrier Functions for Safety-Critical Control of Discrete Systems with Application to Bipedal Robot Navigation", ROBOTICS: SCIENCE AND SYSTEMS XIII, 12 July 2017 (2017-07-12), XP055658722, DOI: 10.15607/RSS.2017.XIII.073 ISBN: 978-0-9923747-3-0 | 7 | INV. G06F17/10 B60W40/00 |
| Y | sections I and III; * abstract * | 1-6 | |
| X | TAKANO RIN ET AL: "Robust Constrained Stabilization Control Using Control Lyapunov and Control Barrier Function in the Presence of Measurement Noises", 2018 IEEE CONFERENCE ON CONTROL TECHNOLOGY AND APPLICATIONS (CCTA), IEEE, 21 August 2018 (2018-08-21), pages 300-305, XP033430259, DOI: 10.1109/CCTA.2018.8511637 [retrieved on 2018-10-26] | 7 | |
| Y | * the whole document * | 1-6 | TECHNICAL FIELDS SEARCHED (IPC) G06F B60W |
| X | AMES AARON D ET AL: "Control barrier function based quadratic programs with application to adaptive cruise control", 53RD IEEE CONFERENCE ON DECISION AND CONTROL, IEEE, 15 December 2014 (2014-12-15), pages 6271-6278, XP032734416, DOI: 10.1109/CDC.2014.7040372 ISBN: 978-1-4799-7746-8 [retrieved on 2015-02-11] | 7 | |
| A | * sections II and III * | 1-6 | |

-/--

The present search report has been drawn up for all claims

| Place of search | Date of completion of the search | Examiner |
|---|---|---|
| Berlin | 20 January 2020 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 19 19 3119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIANGRU XU ET AL: "Robustness of Control Barrier Functions for Safety Critical Control", ARXIV.ORG, CORNELL UNIVERSITY LIBRARY, 201 OLIN LIBRARY CORNELL UNIVERSITY ITHACA, NY 14853, 5 December 2016 (2016-12-05), XP080736989, DOI: 10.1016/J.IFACOL.2015.11.152 | 7 | |
| A | * section 3 * | 1-6 | |
| X,P | RIN TAKANO ET AL: "Application of Robust Control Barrier Function with Stochastic Disturbance Model for Discrete Time Systems", IFAC-PAPERSONLINE, vol. 51, no. 31, 20 September 2018 (2018-09-20), pages 46-51, XP055659364, DE ISSN: 2405-8963, DOI: 10.1016/j.ifacol.2018.10.009 * the whole document * | 1-7 | |

TECHNICAL FIELDS
SEARCHED (IPC)

The present search report has been drawn up for all claims

| Place of search | Date of completion of the search | Examiner |
|---|---|---|
| Berlin | 20 January 2020 | Virnik, Elena |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAKANO ; YAMAKITA.** Proposition of CLF-CBF-QP in Which Disturbance is Considered. *60th Japan Automatic Control Conference,* November 2017
- **TAKANO ; YAMAKITA.** CLF-CBF-QP Control Robust against Observed Disturbance. *5th Multi-symposium on Control Systems,* March 2018
- **AYUSH AGRAWAL ; KOUSHIL SREENATH.** Discrete Control Barrier Functions for Safety-Critical Control of Discrete Systems with Application to Bipedal Robot Navigation. *Robotics: Science and Systems 2017,* July 2017